(19) Europäisches Patentamt
European Patent Office
Office européen des brevets

(11) **EP 4 378 668 A1**

(12) **EUROPEAN PATENT APPLICATION**

(43) Date of publication:
**05.06.2024 Bulletin 2024/23**

(21) Application number: **22383176.9**

(22) Date of filing: **02.12.2022**

(51) International Patent Classification (IPC):
**B29C 65/64** *(2006.01)*  **B29C 65/74** *(2006.01)*
**B29C 65/82** *(2006.01)*  **B29C 65/00** *(2006.01)*

(52) Cooperative Patent Classification (CPC):
(C-Sets available)
**B29C 66/742; B29C 65/02; B29C 65/64;
B29C 65/7437; B29C 65/8253; B29C 66/0044;
B29C 66/21; B29C 66/41; B29C 66/71;
B29C 66/7212; B29C 66/72141; B29C 66/7392;
B29C 66/7394; B29C 66/7422; B29C 66/8322;**

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Fundació Eurecat
08290 Cerdanyola del Vallès (ES)**
• **Universitat de Girona (UdG)
17003 Girona (ES)**

(72) Inventors:
• **Latorre Lázaro, Núria
08172 Sant Cugat del Vallès (ES)**
• **Casellas Padró, Daniel
08242 Manresa (ES)**
• **Costa Balanzat, Josep
17003 Girona (ES)**

(74) Representative: **Balder IP Law, S.L.
Paseo de la Castellana 93
5ª planta
28046 Madrid (ES)**

(54) **METHOD FOR MECHANICALLY BONDING A FIRST SHEET MADE OF METAL AND A SECOND SHEET MADE OF A COMPOSITE MATERIAL COMPRISING FIBERS AND INSTALLATION FOR CARRYING OUT THE METHOD**

(57) Method for mechanically bonding a first sheet (L1) made of metal and a second sheet (L2) made of a composite material comprising fibers, in which a support (S) is used provided with at least one hole (H) and a punch (P) having a flat base (B) and coaxial with the hole (H), the hole (H) having a perimeter and the punch having a perimeter inscribed in the hole perimeter, the method comprising the steps of placing the first sheet (L1) and the second sheet (L2) such that the sheets lie between the punch and the support (S) and such that the first sheet (L1) is closer to the support (S) side while the second sheet (L2) is closer to the punch (P) side, and then punching with the punch (P) until portion (C) of the first sheet (L1) punched is cut away. The invention also relates to an installation for carrying out the method.

Fig. 7

EP 4 378 668 A1

(52) Cooperative Patent Classification (CPC): (Cont.)
B29C 2793/0045; B29L 2031/3002;
B29L 2031/3041; B29L 2031/3067;
B29L 2031/3076; B29L 2031/7146

C-Sets
**B29C 66/71, B29K 2063/00;**
**B29C 66/7212, B29K 2277/10;**
**B29C 66/7212, B29K 2307/04;**
**B29C 66/7212, B29K 2309/08;**
**B29C 66/7212, B29K 2311/10**

## Description

## TECHNICAL FIELD

The present invention belongs to the specific sector of mechanical interlocking joint between metal and carbon fibre reinforced polymers through punching.

## STATE OF THE ART

Multi-material design (MMD) of structural components is an interesting strategy to produce lightweight vehicle components which meet the safety requirements at lower costs and high production volumes. MMD also promotes the application of the most suitable material in each produced part, tailoring components properties in order to balance maximal weight reduction, processability, performance, durability and costs. Interest in MMD is therefore rising in the automotive industry, especially the combination of light metals, such as aluminum with Carbon Fibre Reinforced Polymers (CFRP).

Keeping this in mind, the joint between these dissimilar materials is of significant importance, as it is usually the weakest point of the structure and it determines its structural efficiency. Traditional joining strategies for metal-FRP multi-material structures include mechanical fastening, adhesive bonding, hybrid mechanical-adhesive bonding and welding.

Mechanical fastening strategies generate a mechanical interlock between both materials, with its main advantages being its low cost, simple processing, easy maintenance and non-sensitivity to the working environment.

Conventional mechanical joining strategies between metals and CFRP include bolted joining, Self-Piercing Rivets (SPR) and mechanical clinching. However, these conventional methodologies either increase the weight of the structure with the incorporation of fasteners, or generate the need of drilling a hole in the composite material, which can introduce damage, such as delaminations or fibre breakage, reducing the load bearing capacity of the structure.

Alternative mechanical joining procedures have also been proposed in order to overcome the previous drawbacks, such as pin joints, loop joints and other joining methodologies. However, all these alternative methodologies involve highly complex processing, which hinders their industrial application for high volume markets as the automotive one.

Modifications of conventional mechanical joints have been developed, such as the incorporation of bonded metallic inserts in the composite material to reduce the stress concentration factors at the hole in the composite, or placing dry fibres onto the tacky prepreg fabric to steer the fibres to match the load path and improve the stiffness and strength of the bolted joint. Conventional clinching has also been adapted to extend its suitability to materials with low ductility, as can be CFRP. Some examples are the use of a spring die, Friction Assisted Clinching, or to soften the polymeric matrix in thermoplastic composites to increase the composite's toughness and formability. However, all these modifications imply extra process steps or complexity.

## DESCRIPTION OF THE INVENTION

For overcoming the state of the art limitations, the present invention proposes a method for mechanically bonding a first sheet made of metal and a second sheet made of a composite material comprising fibers, in which a support is used provided with at least one hole and a punch having a flat base and coaxial with the hole, the hole having a perimeter and the punch having a perimeter inscribed in the hole perimeter, the method comprising the following steps:

a. placing the first sheet and the second sheet such that the sheets lie between the punch and the support and such that the first sheet is closer to the support side while the second sheet is closer to the punch side;

b. punching with the punch until a portion of the first sheet punched is cut away.

By the expression "the hole having a perimeter and the punch having a perimeter inscribed in the hole perimeter" it is meant that in plant view, that is, from above according to the punching axis, the perimeter will have substantially the same shape, but they will be separated by a gap, that will allow the second sheet to be continuous.

The invention provides a cost-efficient and non-weight penalizing mechanical joining technology between metal and a composite material comprising fibers based on a single step punching process. Such methodology can be easily implemented in automotive production lines, were punching operations are commonly used. It does not increase the weight of the part with the addition of fasteners, on the contrary, it removes part of the metallic material, making the part even lighter. In addition, a hole is created in the metallic material, which relives stress concentration more efficiently than composite materials due to its higher plasticity. Therefore, damage on the composite material is minimized without adding weight to the structure or complexity to the joining process.

Furthermore, the method allows to achieve joint strengths in the same range than other mechanical joining technologies while minimizing damage on the composite material and without adding weight to the structure or complexity to the joining process.

In some embodiments, step b) is carried out until the flat base of the punch reaches the plane defined by the contact plane between the first layer and the support and such that the portion of the first sheet punched is cut away.

In some embodiments the hole is a circular hole and the punch is cylindrical, the circular hole having a diameter $D_H$ and the punch having a diameter $D_P$ such that $D_H > D_P$.

In some embodiments, the following ratio is defined:

$$c = \frac{D_H - D_P}{2t} \cdot 100$$

t being the added thickness of the first sheet, the second sheet and the third sheet, if it is present; c being comprised in the range [3%; 75%].

Preferably, c is comprised in the range [13%; 42%].

In some embodiments, an antiadhesive layer is placed on the second sheet before punching, the antiadhesive layer being an antiadhesive sheet or an oil.

In some embodiments, the first sheet is made of aluminium and the second sheet is made of a carbon fibre reinforced polymer.

In some embodiments the first sheet is a carbon fiber reinforced polymer, a glass fiber reinforced polymer, an aramid or a natural fiber reinforced polymer.

In some embodiments the fiber is a long fiber, woven as a twill 2x2 or unidirectional.

In some embodiments the polymer is:

- an epoxy or phenolic thermoset matrix; or
- a thermoplastic.

Advantageously, the method comprises a further step:

c. curing the junction by locally applying pressure and temperature.

Post-curing methods to join CFRP and aluminum alloy sheets are already known to reduce the damage generated in composite materials. In the context of the present invention, it allows to greatly improve the joint.

Preferably, step c is carried out by placing the bonded sheets in a press provided with a lower and an upper dye and applying temperature and pressure. As an alternative step c can be carried out by placing the bonded sheets in a bag, making the vacuum in the bag and applying temperature to the bag.

The invention also relates to an Installation for carrying out the method according to any of the above mentioned variants, which comprises a support provided with at least one hole and a punch having a flat base and coaxial with the hole, the hole having a perimeter and the punch having a perimeter inscribed in the hole perimeter. Preferably, the hole is a circular hole and the punch is cylindrical, the circular hole having a diameter $D_H$ and the punch having a diameter $D_P$ such that $D_H > D_P$.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 is a top perspective photograph of the product obtained with the method according to the invention. The top layer shown is the antiadherent foil or third sheet.

Figure 2 shows the hole in the lower plate with the cut-out obtained after the joining process.

Figure 3 is a view from the side of the metallic layer of the joint obtained.

Figure 4 is a micrograph of a section of the joint obtained, after applying a press curing step.

Figure 5 is a micrograph of the same section as Figure 4 but inspected with epifluorescence microscope.

Figure 6 is a schematic section of the installation according to the invention.

Figure 7 schematically shows various configurations obtained throughout the punching process.

Figure 8 shows the configurations before and after the curing process when using a flat plate press to apply pressure and temperature.

Figures 9 to 12 show the configurations shows different steps of the curing process using a pressure and temperature press.

Figure 13 shows a cured joint obtained by a vacuum curing process with application of temperature.

Figure 14a shows a mechanical interlocking joint between AA5754 H111 and the twill 2x2 prepreg after punching and prior to curing.

Figure 14b shows a mechanical interlocking joint between AA5754 H111 and the twill $2\times2$ prepreg after curing from the Al side.

Figure 14c shows a mechanical interlocking joint between AA5754 H111 and the twill $2\times2$ prepreg after curing form the CFRP side.

Figure 14d shows a mechanical interlocking joint between AA5754 H111 and the UD prepreg after curing from the Al side.

Figure 14e shows a mechanical interlocking joint between AA5754 H111 and the UD prepreg after curing from the CFRP side.

Figs 15 is the load-stroke curves recorded during the punching process.

## DESCRIPTION OF A WAY OF CARRYING OUT THE INVENTION

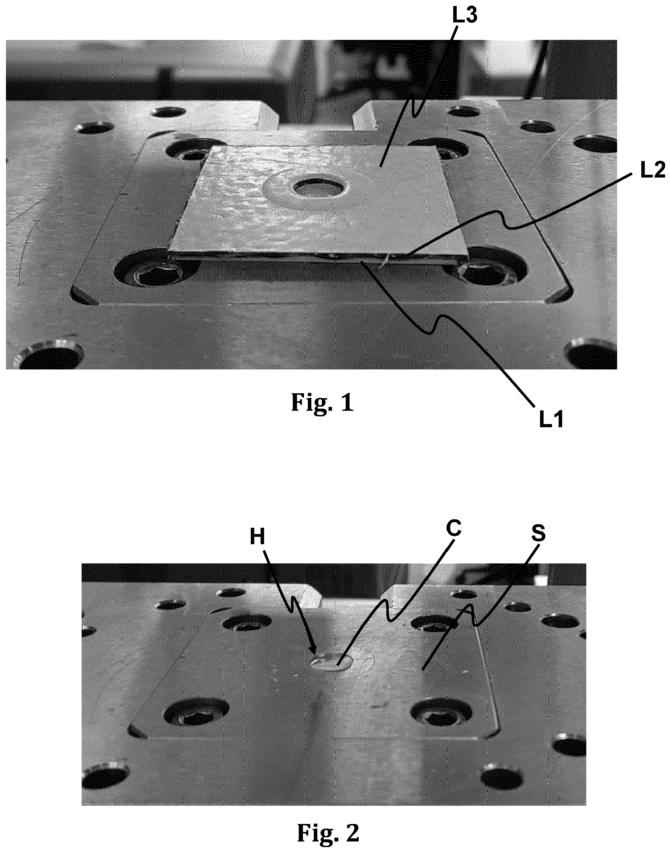

In FIG. 1 an installation according to one aspect of the invention is disclosed for carrying out the method according to the invention. It comprises a support S provided with at least one circular hole H and a punch P having a flat base B and coaxial with the hole H, the circular hole H having a diameter $D_H$ and the punch having a diameter $D_P$ such that $D_H > D_P$.

This installation allows to carry out a method for mechanically bonding a first sheet L1 made of metal and a second sheet L2 made of a composite material comprising fibers.

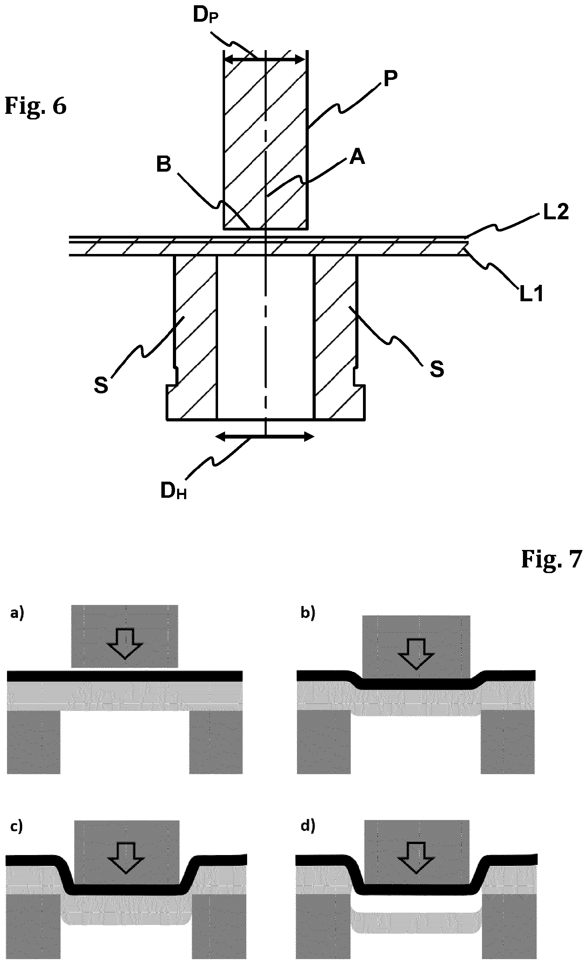

The method, as shown in figure 7, comprises the following steps:

a. placing the first sheet L1 and the second sheet L2 such that the sheets lie between the punch and the support S and such that the first sheet L1 is closer to the support S side while the second sheet L2 is closer to the punch (P) side, as shown in Fig. 7a;

b. punching with the cylindrical punch P, as shown in Figs. 7b and 7c, until a portion C of the first sheet L1 punched is cut away, as shown in fig. 7d. Although all the figures show embodiments, the invention can be applied to other geometries, such as square, rectangular, elliptic or more complex geometries.

In the embodiment shown in Fig. 7 the punch does not reach the plane defined by the contact plane between the first layer L1 and the support S, but the thickness of the composite sheet L2 allows to cut away the circular portion of the metallic sheet L1.

In other embodiments step b) can be carried out until the flat base B of the punch P reaches the plane defined by the contact plane between the first layer L1 and the support S and such that the portion C of the first sheet L1 punched is cut away.

As shown in Fig. 1, in some embodiments an antiadhesive layer L3 is placed on the second sheet L2 before punching, the antiadhesive layer L3 being an antiadhesive sheet or an oil.

Embodiments: Rolled sheets of 1,5mm thick AA5754 H111 aluminium alloy and Twill 2x2 prepreq of 650 g/m$^2$ with a MTC275 toughened epoxy resin system from SHD Composites and UD prepreq 300 g/m$^2$ with the M77 snap cure epoxy resin from Hexcel.

In a practical embodiment, as first sheet L1, rolled sheets of 1,5mm thick AA5754 H111 aluminium alloy were used. Such alloy is the most common non heat treatable aluminum alloy used in automotive industry for production of medium strength parts due to its high formability and good corrosion resistance. Aluminium sheets were watercut perpendicular to the rolling direction. Such aluminium sheets were joined with CFRP sheets of 0,60-0,65mm thickness.

As second sheet L2, two types of CFRP prepregs with a thermosetting epoxy matrix were used to manufacture them: a Twill 2x2 prepreg of 650g/m2 with a MTC275 toughened epoxy resin system from SHD Composites (MTC275 C650 HS 12K 36% RW Twill 2x2 650g/m2) and an unidirectional (UD) prepreg of 300g/m2 with the M77 snap cure epoxy resin system from Hexcel (M77 38% RW UD 300g/m2). For the Twill 2x2 specimens, one sheet of the MTC275 Twill 2x2 650g/m2 was used as the CFRP substrate, while for the UD specimens, two sheets of the M77 UD 300g/m2 were used in a 0/90° layup in order to obtain a thickness of 0,60mm.

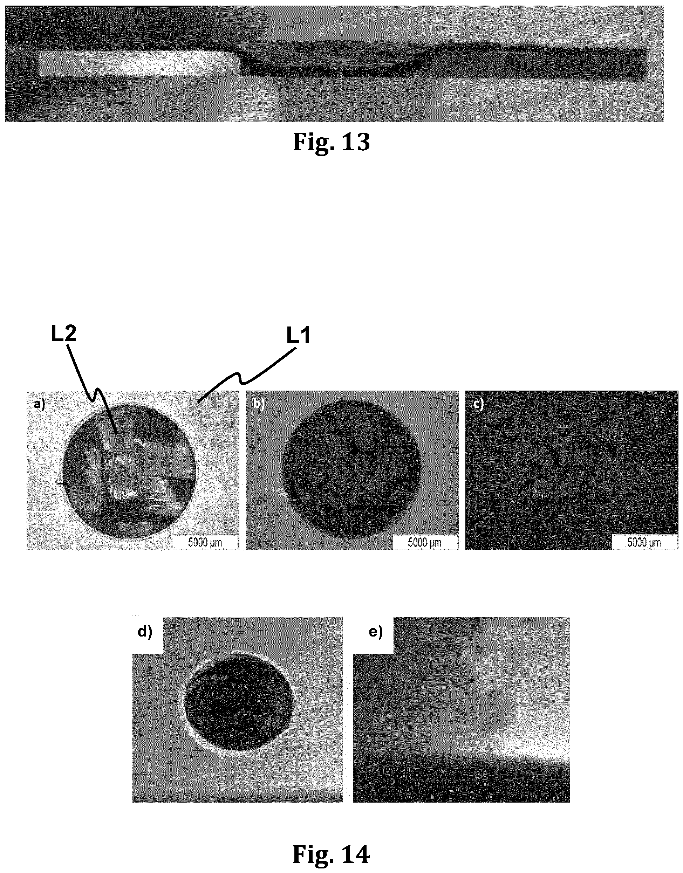

The mechanical joining procedure to join aluminum with CFRP consists of laying up uncured prepreg layers L2 on top of an aluminum sheet L1 and punching the whole system with the CFRP facing the punch side of the set-up. By adjusting the cutting clearance and the punch stroke, the aluminum sheet L1 is completely perforated while the carbon fibres are not (Figure 14a). Instead, these carbon fibres are pressed against the hole walls in the aluminum, generating a mechanical interlock between both materials. As joining takes place in a polymer viscous flow state, delamination and tear of the CFRP are reduced.

The specimens are cured afterwards by thermoforming (Figure 14b to 14e). Co-curing of the composite epoxy resin on the aluminum takes place and therefore, adhesive bonding between both substrates L1, L2 is present apart from mechanical interlocking.

## Punching equipment and parameters

Mechanical interlocking joints were achieved by means of a punching tooling as shown in Fig. 6 mounted on the Zwick Roell Universal Testing Machine with a 50kN loadcell. The aluminum surface was thoroughly cleaned with acetone using a wipe cloth to remove any surface contamination.

The geometrical characteristics of the punch P and the S are shown in Figure 6. The cutting clearance c, eq. 1 where $D_H$ is the die diameter and $D_P$ is the punch diameter, is defined as a percentage which relates the gap between the punch and the die with the thickness of the punched material t:

$$c = \frac{D_H - D_P}{2t} \cdot 100$$

In these embodiments cutting clearances ranging from 13 to 42% were used, to allow the carbon fibres to slide between the punch and the die. Another relevant punching parameter is the punch stroke, which is the penetration of the punch on the substrate being punched.

In the present embodiment, the joints were performed at a constant punching speed of 10mm/min by placing the CFRP at the punch side and the aluminum at the die side. The punch diameter was set to 10mm, as it is a typical hole diameter found in automotive body-in-white parts, and the fillet radius was 0mm. Different combinations of process parameters (die diameter and punch stroke) were tested in order to determine their influence on the mechanical performance of the joint and stablish a process window. The tested die diameters were 12,0mm, 11,7mm 11,4mm, 11,3mm, 11,2mm, 11,1mm, 10,9mm, 10,8mm, 10,7mm, and 10,6mm, which correspond to clearance values ranging between 13% and 42%.

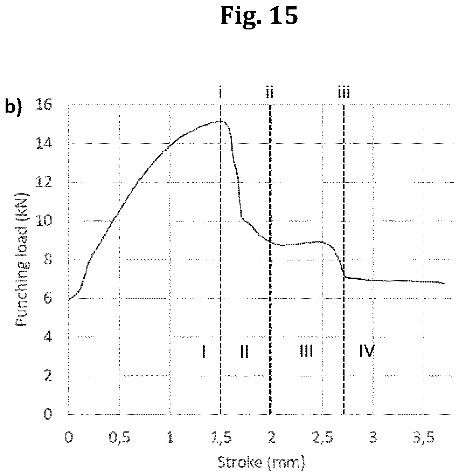

Load-stroke curves were recorded during the punching process as shown in fig 15. Four different punching regimes were observed. The first one (I) corresponds to deformation and strain hardening of the aluminum with the formation of the roll-over depth of the cutting edge. The second one (II) corresponds to cutting of the aluminum, generating the fracture and smooth sheared edge, and the third one (III) corresponds to the complete punching of the aluminum sheet. As the punch stroke increased during the III regime, fibres progressively broke, until maximum fibre breakage occurred in the beginning of regime IV, where punching was completed.

Thus, the process parameters which allow the generation of the mechanical interlocking joint were defined as the ones falling in punching regime III (Figure 15), where the aluminum had been completely punched, but the CFRP had not. Therefore, per each die diameter, a first punch with a long punch stroke was performed in order to obtain the complete load-stroke and define the different punching regimes. Then, several punching with different punch strokes falling in punching regime III were performed.

Curing steps

In the embodiments shown, the curing process were carried out by compression molding, using a flat steel mold. In the present case a flat mold is used because the test tubes are flat, but more complex geometries can be envisaged as well.

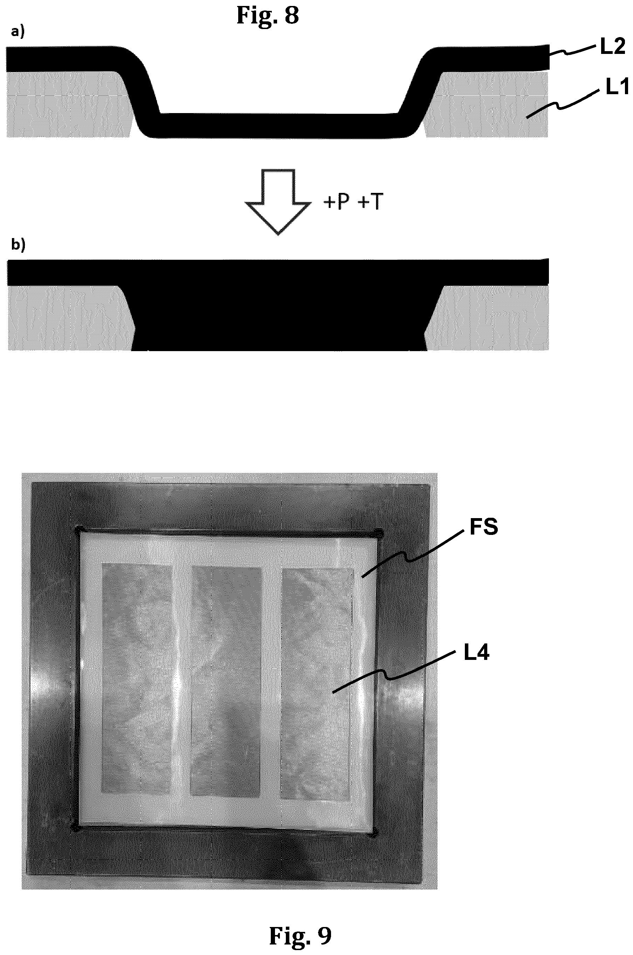

Silicone paper L4 was added to prevent the epoxy resin from sticking to the mold, and a silicone frame FS to prevent the epoxy resin and the carbon fibers from flowing out of the test tube, as shown in Figure 9.

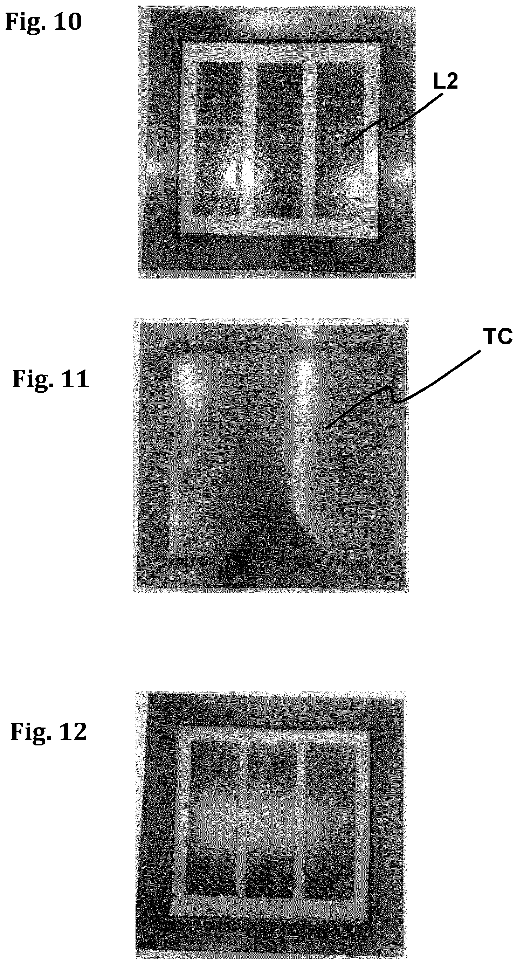

Then the sheets L1, L2 with the aluminum and the carbon fiber already bonded in previous steps are placed in the mold, as shown in fig. 10, and then, as shown in fig. 11, the top cover TC of the flat mold is added.

Fig. 8a shows schematically the joined sheets before curing while Fig. 8b shows the junction after the system was placed in a hot plate press, where a pressure of 27bar (2.7MPa) and 150°C were applied for 35 min to obtain the product shown in Figure 12.

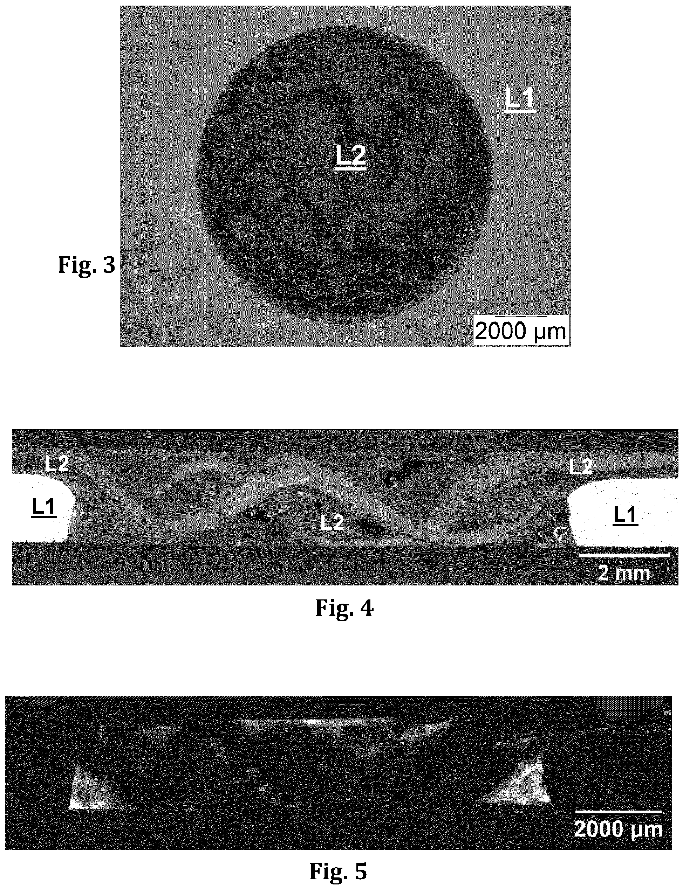

The cross-section of the generated joint was inspected with stereomicroscopy as shown in Fig. 4 and with epifluorescence, as shown in fig. 5. The Twill 2x2 weave from the CFRP can be clearly observed in both images. Epoxy resin fluorescence's generates a clearer contrast between the fibres, which appear in black, and the epoxy resin, which appears in yellow in Fig. 5. This indicates that the carbon fibres are pressed against the roll-over depth, while the area of the hole in contact with the fracture depth is filled with resin. The carbon fibres have filled the rest of the aluminum hole.

The curing process can also be done by generating the vacuum with a vacuum bag and heating the system also to 150°C for 35min. The joint section in this case is as shown in fig. 13, since the vacuum body presses the fiber and resin, making the final shape to exhibit a concavity.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

Claims

1. Method for mechanically bonding a first sheet (L1) made of metal and a second sheet (L2) made of a composite material comprising fibers, in which a support (S) is used provided with at least one hole (H) and a punch (P) having a flat base (B) and coaxial with the hole (H), the hole (H) having a perimeter and the punch having a perimeter inscribed in the hole perimeter, the method comprising the following steps:

　　a. placing the first sheet (L1) and the second sheet (L2) such that the sheets lie between the punch and the support (S) and such that the first sheet (L1) is closer to the support (S) side while the second sheet (L2) is closer to the punch (P) side;

    **b.** punching with the punch (P) until portion (C) of the first sheet (L1) punched is cut away.

**2.** Method according to claim 1, wherein step b) is carried out until the flat base (B) of the punch (P) reaches the plane defined by the contact plane between the first layer (L1) and the support (S) and such that the portion (C) of the first sheet (L1) punched is cut away.

**3.** Method according to claim 1, wherein the hole (H) is a circular hole (H) the punch (P) is cylindrical, the circular hole (H) having a diameter $D_H$ and the punch having a diameter $D_P$ such that $D_H > D_P$.

**4.** Method according to claim 3, wherein the following ratio is defined:

$$c = \frac{D_H - D_P}{2t} \cdot 100$$

    **t** being the added thickness of the first sheet (L1), the second sheet (L2) and a third antiadherent sheet (L3) if present;
    **c** being comprised in the range [3%; 75%].

**5.** Method according to claim 4, wherein c is comprised in the range [13%; 42%].

**6.** Method according to any of the preceding claims, wherein an antiadhesive layer (L3) is placed on the second sheet (L2) before punching, the antiadhesive layer (L3) being an antiadhesive sheet or an oil.

**7.** Method according to any of the preceding claims, wherein the first sheet (L1) is made of aluminium and the second sheet (L2) is made of a carbon fibre reinforced polymer.

**8.** Method according to any of the preceding claims, wherein the first sheet (L2) is a carbon fiber reinforced polymer, a glass fiber reinforced polymer, an aramid or a natural fiber reinforced polymer.

**9.** Method according to claim 8, wherein the fiber is a long fiber, woven as a twill 2x2 or unidirectional.

**10.** Method according to claim 8, wherein the polymer is:

    - an epoxy or phenolic thermoset matrix; or
    - a thermoplastic.

**11.** Method according to any of the preceding claims, which comprises a further step: **c.** curing the junction by locally applying pressure and temperature.

**12.** Method according to claim 11, wherein step c is carried out by placing the bonded sheets (L1, L2) in a press provided with a lower and an upper dye.

**13.** Method according to claim 11, wherein step c is carried out by placing the bonded sheets in a bag, making the vacuum in the bag and applying temperature to the bag.

**14.** Installation for carrying out the method of any of claims 1 to 10, which comprises a support (S) provided with at least one hole (H) and a punch (P) having a flat base (B) and coaxial with the hole (H), the hole (H) having a perimeter and the punch having a perimeter inscribed in the hole perimeter.

**15.** Installation according to claim 14, wherein the hole (H) is a circular hole (H) and the punch (P) is cylindrical, the circular hole (H) having a diameter $D_H$ and the punch having a diameter $D_P$ such that $D_H > D_P$.

**Fig. 1**

**Fig. 2**

**Fig. 3**

**Fig. 4**

**Fig. 5**

**Fig. 6**

**Fig. 7**

## Fig. 8

a)

L2

L1

+P +T

b)

FS

L4

## Fig. 9

**Fig. 13**

**Fig. 14**

# Fig. 15

Europäisches
Patentamt

European
Patent Office

Office européen
des brevets

# EUROPEAN SEARCH REPORT

Application Number

EP 22 38 3176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2013 211580 A1 (UNIV DRESDEN TECH [DE]) 19 December 2013 (2013-12-19) * abstract * * figure 4 * * paragraph [0029] * | 1-15 | INV. B29C65/64 B29C65/74 B29C65/82 B29C65/00 |
| X | SALAMATI MASOUD ET AL: "Processing and tooling considerations in joining by forming technologies; part A-mechanical joining", THE INTERNATIONAL JOURNAL OF ADVANCED MANUFACTURING TECHNOLOGY, SPRINGER, LONDON, vol. 101, no. 1, 31 October 2018 (2018-10-31), pages 261-315, XP036723970, ISSN: 0268-3768, DOI: 10.1007/S00170-018-2823-Y [retrieved on 2018-10-31] | 14,15 | |
| A | * pages 279-281 * * figure 22 * | 1-13 | TECHNICAL FIELDS SEARCHED (IPC) B29C |

The present search report has been drawn up for all claims

| Place of search | Date of completion of the search | Examiner |
|---|---|---|
| Munich | 9 May 2023 | Taillandier, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 38 3176

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2023

| Patent document cited in search report | Publication date | Patent family member(s) | Publication date |
|---|---|---|---|
| DE 102013211580 A1 | 19-12-2013 | NONE | |

EPO FORM P0459